# EUROPÄISCHE PATENTANMELDUNG

(11) **EP 0 522 197 A1**
(43) Veröffentlichungstag der Anmeldung: **13.01.1993**
(21) Anmeldenummer: 91113503.6
(22) Anmeldetag: 12.08.1991
(51) Int. Cl.: B60S 9/06

(54) **Unterbauhubstütze mit Federentlastung**

(30) Priorität: 12.07.1991 DE 4123069
(71) Anmelder: Sellmaier, Willi, sen., D-89407 Dillingen (DE)
(72) Erfinder: Sellmaier, Willi, sen., D-89407 Dillingen (DE)

(57) **Zusammenfassung**

Fahrzeuge mit Sonderaufbauten (insbesondere z.B. Wohnmobile) weisen hinsichtlich ihres Fahr- bzw. Standverhaltens zwei wesentliche Probleme auf: zum einen ein oftmals problematisches Fahrverhalten aufgrund des langen Hecküberhanges (Schaukelbewegungen, ungünstige Gewichtsverteilung), zum anderen einen unstabilen Stand durch fehlende Stützmaßnahmen an der Hinterachse.

Die vorliegende Erfindung kombiniert eine stufenlose Federentlastung der Hinterachse während des Fahrbetriebes durch eine Teleskopfeder (I) mit stufenlos ausfahrbaren Hubstützen (K) zum sicheren Niveauausgleich während des Standbetriebes des Fahrzeuges. Die Entlastung der Hinterradfederung erreicht dabei bis zu 500 Kg, die Stützleistung im Standbetrieb ist bis zu 3 Tonnen pro Stütze möglich.
Details und Funktionsweise zeigt die beigefügte Zeichnung.

## Beschreibung

Es ist bekannt, daß Fahrzeuge mit Sonderaufbauten (insbesondere z.B. Wohnmobile) aufgrund ihres meist langen Hecküberhanges ein verändertes Fahrverhalten durch Schaukelbewegungen aufweisen.
Darüber hinaus ist die Stabilität der Aufbauten im Stand oftmals nicht gewährleistet. Zudem ergeben sich Schwierigkeiten beim Abstellen auf unebenem Gelände durch die fehlende Möglichkeit eines Niveauausgleiches. Zur Beseitigung dieser Probleme werden sowohl Verstärkungsfedern zum Einbau in die Basisfahrgestelle verwendet als auch auf unterschiedlichen Techniken beruhende Stützmechanismen.
Die bisher verwendeten Systeme weisen jedoch einige Nachteile auf: So ist etwa die Federentlastung nur umständlich bzw. meist gar nicht einstellbar, ein stufenloses Verstellen ist nur selten möglich; eine Kombination zwischen Federn einerseits, und Stützen andererseits ist bisher nicht gegeben; in der Regel war für die Anbringung der von innen bedienbaren Hubsysteme ein Durchbruch durch den Fahrzeugunterboden notwendig, welcher bei vielen Fahrzeugtypen nicht möglich ist bzw. - dort, wo die Möglichkeit besteht - zum Problem der Kältebrückenbildung führt.

Der im vorliegenden Patentanspruch angegebenen Erfindung liegt das Problem zugrunde, für Fahrzeuge mit Sonderaufbau, insbesondere mit langem Überbau, eine zusätzliche Federentlastung während der Fahrt und eine sichere Abstützung im Stand mit dem notwendigen Niveauausgleich zu gewährleisten. Darüber hinaus sollten Feder- und Hubkraft je nach Fahrzeugbedarf stufenlos einstellbar sein.

Mit der Erfindung werden insbesondere die folgenden Vorteile erzielt:
Die Befestigung an der Achse ist über die Lage der Befestigungskonsole stufenlos einzustellen, - hierdurch und in Verbindung mit dem aus- bzw. einfahrbaren Stützarm wird eine stufenlose Entlastung der Hinterradfederung je nach Bedarf erreicht (bis 500 Kg); eine weitere Abstufung des Federkomforts kann durch den alternativen Einsatz stärkerer bzw. schwächerer Teleskopfedern ermöglicht werden; die stufenlos ausfahrbare Hubstütze ermöglicht einen weitgehenden Niveauausgleich bei abgestellten Fahrzeugen auf unebenem Gelände bei sicherem Stand (Abstützung und Niveauausgleich sind bis zu 3 Tonnen pro Stütze möglich); die verdreh- und auswechselbare Aufhängung an der Hinterachse ermöglicht die Anbringung der Feder-Stützen-kombination an alle Fahrzeuge mit durchgehender Achse; durch eine optische Kontrollanzeige (Quecksilberschalter mit zweifachem Impuls und Doppelkontrolleuchte) kann dem Fahrer des Fahrzeuges sowohl der aus- als auch eingefahrene Zustand der Stütze angezeigt werden.
Ein Ausführungsbeispiel der Erfindung ist in der Zeichnung dargestellt.
In Fig. 1 ist der Abstützarm hochgeklappt, das Fahrzeug ist fahrbereit. In diesem Zustand wird die Hinterachse durch die Teleskopfeder (I) entlastet, wobei der Entlastungsgrad stufenlos einstellbar ist.
In Fig. 2 wurde der Abstützarm durch Bedienung des Spindelantriebes und der Schubstange (J+K) ausgefahren und stützt über die bewegliche Fußplatte das nun im Stand befindliche Fahrzeug ab.

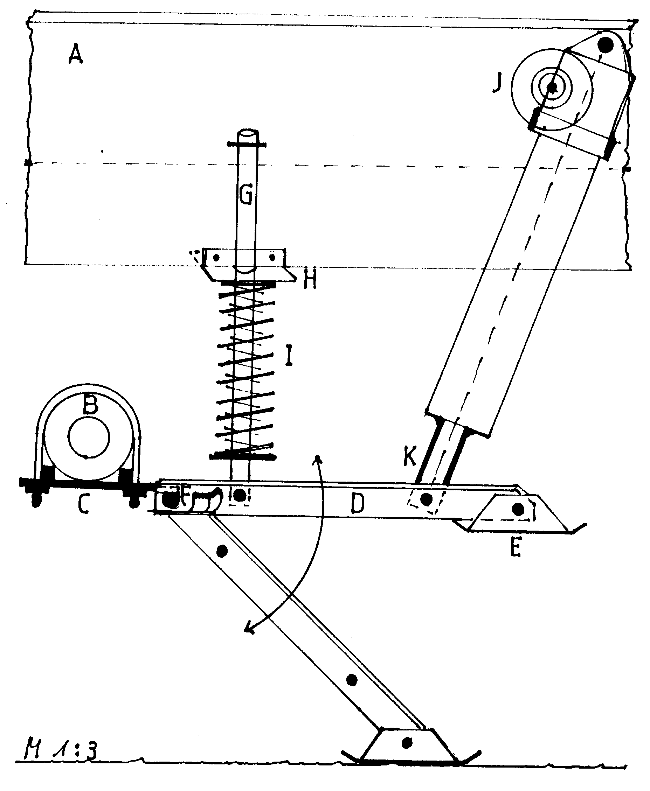

Auch hier ist ein stufenloses Ausfahren und ein entsprechender Stützgrad möglich. Darüber hinaus kann durch die Verwendung zweier Stützen (links und rechts) an der Hinterachse eine Anpassung des Fahrzeugstandes an das Gelände erreicht werden.

### Legende zur Zeichnung

**Es bedeuten**
- A: = Rahmen des Fahrzeuges
- B: = Achse des Fahrzeuges
- C: = Befestigungskonsole mit Rundschelle
- D: = Abstützarm
- E: = Bewegliche Fußplatte
- F: = Quecksilberschalter mit zweifachem Impuls
- G: = Führungsrohr
- H: = Führungswinkel zur Ausbringung (T-Winkel)
- I: = Teleskopfeder (Links- und Rechts-Windung)
- J: = Antriebsmotor der Spindel
- K: = Schubstange (im Gehäuse)

## Patentansprüche

1. Unterbauhubstütze mit Federentlastung zur Federverstärkung von Fahrgestellen im Automobilbereich sowie zur Abstützung und zum Niveauausgleich von Fahrzeugen insbesondere für Wohnmobile, Kfz mit Sonderaufbauten etc, dadurch gekennzeichnet, daß die Entlastungsvorrichtung aus einer Feder und aus einem elektromechanisch auszufahrenden Stützarm zusammengesetzt ist.
